# EUROPEAN PATENT APPLICATION

(11) **EP 4 550 909 A1**
(43) Date of publication of application: **07.05.2025**
(21) Application number: 23830091.7
(22) Date of filing: 21.06.2023
(51) Int. Cl.: H04W 72/04, H04L 5/00

(54) **COMMUNICATION METHOD AND APPARATUS**

(30) Priority: 30.06.2022 CN 202210782068
(71) Applicant: Spreadtrum Communications (Shanghai) Co., Ltd., Shanghai 201203 (CN)
(72) Inventor: ZHANG, Meng, Shanghai 201203 (CN)
(74) Representative: Ipside
(86) International application number: PCT/CN2023/101814
(87) International publication number: WO 2024/001912

(57) **Abstract**

Embodiments of the present application provide a communication method and an apparatus and relate to the field of communication technologies. The method includes: processing, by a terminal device after the terminal device determines that a bandwidth part BWP changes, a current uplink resource based on the change of the BWP, where the current uplink resource is used for a present uplink transmission. According to the method provided by the embodiments of the present application, an uplink resource can be processed in a scenario where the BWP has changed, thereby facilitating improvement of uplink communication performance.

## Description

This application claims priority to Chinese Patent Application No. 202210782068.4, entitled "COMMUNICATION METHOD AND APPARATUS" and filed with the China National Intellectual Property Administration on June 30, 2022, which is hereby incorporated by reference in its entirety.

### TECHNICAL FIELD

Embodiments of the present application relates to the field of communication technologies and, in particular, to a communication method and an apparatus.

### BACKGROUND

In order to adapt to flexible and changeable uplink and downlink service scenarios, a flexible D/U transmission mode may be supported in the future. Terminal devices or network devices can implement different D/U configurations on different sub-bands.

However, in actual application scenarios, changes in uplink sub-bands and/or downlink sub-bands may occur. For example, changes in sub-bands may include changes in bandwidth, starting frequency, and ending frequency. For uplink resources, such as RACH Occasion (RACH Occasion, RO) resources and physical uplink control channel (Physical Uplink Control Channel, PUCCH) resources, at present, a network side usually uses semi-static signaling, such as radio resource control (Radio Resource Control, RRC) signaling, to configure the uplink resources. Therefore, in a case of dynamic changes in uplink sub-bands and/or downlink sub-bands, how to process uplink resources is an urgent problem to be solved.

### SUMMARY

Embodiments of the present application provide a communication method and an apparatus, by which uplink resources can be processed in a scenario where a BWP changes, thus facilitating improvement of uplink communication performance.

In a first aspect, an embodiment of the present application provides a communication method, including:
processing, by a terminal device after the terminal device determines that a bandwidth part BWP changes, a current uplink resource based on the change of the BWP, where the current uplink resource is used for a present uplink transmission.

In the embodiment of the present application, the uplink resource can be processed in a scenario where the BWP changes, thus facilitating improvement of uplink communication performance.

In a possible implementation, the uplink resource includes a physical uplink control channel PUCCH resource or a RACH Occasion RO resource.

In a possible implementation, the terminal device determining that the bandwidth part BWP changes includes:
receiving, by the terminal device, first configuration information, and determining, based on the first configuration information, that the BWP changes, where the first configuration information is used to configure an uplink sub-band, a downlink sub-band and/or a guard band within the BWP; or
receiving, by the terminal device, a BWP switching indication, and determining, based on the BWP switching indication, that the BWP changes; or
detecting, by the terminal device, whether expiration of a BWP inactivity timer has been reached, and if expiration of the BWP inactivity timer has been reached, determining that the BWP changes.

In a possible implementation, the first configuration information is carried by downlink control information DCI, medium access control control element MAC CE and/or radio resource control RRC signaling.

In a possible implementation, processing the current uplink resource based on the change of the BWP includes:
determining whether the current uplink resource is entirely located in an uplink sub-band of the changed BWP;
if the current uplink resource is not entirely located in the uplink sub-band of the changed BWP, discarding, by the terminal device, the current uplink resource.

In a possible implementation, processing the current uplink resource based on the change of the BWP includes:
determining whether the current uplink resource is entirely located in an uplink sub-band of the changed BWP;
if the current uplink resource is not entirely located in the uplink sub-band of the changed BWP, using, by the terminal device, a part of the current uplink resource which is located in the uplink sub-band of the changed BWP.

In a possible implementation, after discarding, by the terminal device, the current uplink resource, the method further includes:
using, by the terminal device in a next uplink transmission, an uplink resource with a same frequency domain resource position as the current uplink resource.

In a possible implementation, the uplink resource is a PUCCH resource, and processing the current uplink resource based on the change of the BWP includes:
determining whether the current PUCCH resource is entirely located in an uplink sub-band of the changed BWP;
if the current PUCCH resource is not entirely located in the uplink sub-band of the changed BWP, moving, by the terminal device, the current PUCCH resource to the uplink sub-band of the changed BWP.

In a possible implementation, the method further includes:
if it is detected that the current PUCCH resource after the moving collides with other PUCCH resources or the current PUCCH resource after the moving is still not entirely located in the uplink sub-band of the changed BWP, discarding, by the terminal device, the current PUCCH resource after the moving.

In a possible implementation, the uplink resource is a PUCCH resource, and the method further includes:
determining whether the current PUCCH resource after frequency hopping is entirely located in an uplink sub-band of the changed BWP, where the current PUCCH resource after frequency hopping is used for the present uplink transmission;
if the current PUCCH resource after frequency hopping is not entirely located in the uplink sub-band of the changed BWP, discarding, by the terminal device, the current PUCCH resource after frequency hopping.

In a possible implementation, the uplink resource is a PUCCH resource, and the method further includes:
determining whether the current PUCCH resource after frequency hopping is entirely located in an uplink sub-band of the changed BWP, where the current PUCCH resource after frequency hopping is used for the present uplink transmission;
if the current PUCCH resource after frequency hopping is not entirely located in the uplink sub-band of the changed BWP, determining, by the terminal device, the current PUCCH resource after frequency hopping based on second configuration information, where the second configuration information is used to reconfigure the PUCCH resource after frequency hopping, and the reconfigured current PUCCH resource after frequency hopping is located in the uplink sub-band of the changed BWP, and the reconfigured current PUCCH resource after frequency hopping is used for the present uplink transmission.

In a possible implementation, the method further includes:
receiving the second configuration information, where the second configuration information is carried by RRC signaling.

In a second aspect, an embodiment of the present application provides a communication method, including:
sending, by a network device, first configuration information or a bandwidth part BWP switching indication to indicate that a BWP changes, where the first configuration information is used to configure an uplink sub-band, a downlink sub-band and/or a guard band within the bandwidth part BWP.

In a possible implementation, the first configuration information is carried by downlink control information DCI, medium access control control element MAC CE and/or radio resource control RRC signaling.

In a possible implementation, the method further includes:
if the BWP changes, sending, by the network device, second configuration information, where the second configuration information is used to reconfigure a current PUCCH resource after frequency hopping, and the reconfigured current PUCCH resource after frequency hopping is located in an uplink sub-band of the changed BWP.

In a possible implementation, the second configuration information is carried by RRC signaling.

In a third aspect, an embodiment of the present application provides a communication apparatus, including: a processor and a memory, where the memory is configured to store a computer program; the processor is configured to run the computer program to implement the communication method as described in the first aspect.

In a fourth aspect, an embodiment of the present application provides a communication apparatus, including: a processor and a memory, where the memory is configured to store a computer program; the processor is configured to run the computer program to implement the communication method as described in the second aspect.

In a fifth aspect, an embodiment of the present application provides a computer-readable storage medium, in which a computer program is stored, and when the computer program is running on a computer, the computer is caused to implement the communication method as described in the first aspect and the second aspect.

In a sixth aspect, an embodiment of the present application provides a computer program product, where the computer program product includes a computer program, and when the above-mentioned computer program is executed by a computer, the computer is caused to implement the communication method as described in the first aspect or the second aspect.

In a possible implementation, the program in the sixth aspect may be stored in whole or in part on a storage medium packaged with a processor, or may be stored in part or in whole on a memory not packaged with a processor.

In a seventh aspect, an embodiment of the present application provides a communication apparatus, including: one or more functional modules, where the one or more functional modules are configured to implement the communication method provided in any implementation of the first aspect.

In an eighth aspect, an embodiment of the present application provides a communication apparatus, including: one or more functional modules, the one or more functional modules are configured to implement the communication method provided in any implementation of the second aspect.

In a ninth aspect, a communication system is provided, including: a communication apparatus for implementing the communication method provided in any implementation of the first aspect and a communication apparatus for implementing the communication method provided in any implementation of the second aspect.

The communication apparatus in the third aspect and the seventh aspect may be a chip or a terminal device, and the communication apparatus in the fourth aspect and the eighth aspect may be a chip or a network device.

### BRIEF DESCRIPTION OF DRAWINGS

FIG. 1 is a network architecture diagram of a communication system provided in an embodiment of the present application.
FIG. 2 is a flow diagram of an embodiment of a communication method provided in the present application.
FIG. 3 is a schematic diagram of an embodiment of a PUCCH resource processing approach provided in the present application.
FIG. 4 is a schematic diagram of PUCCH resource position change provided in an embodiment of the present application.
FIG. 5 is a schematic diagram of another embodiment of a PUCCH resource processing approach provided in the present application.
FIG. 6 is a schematic diagram of PUCCH resource selection provided in an embodiment of the present application.
FIG. 7 is a schematic diagram of PUCCH resource frequency hopping provided in an embodiment of the present application.
FIG. 8 is a schematic diagram of reconfiguration of a PUCCH resource after frequency hopping provided in an embodiment of the present application.
FIG. 9 is a schematic diagram of RO resource processing provided in an embodiment of the present application.
FIG. 10 is a schematic structural diagram of an embodiment of a communication apparatus provided in the present application.
FIG. 11 is a schematic structural diagram of another embodiment of a communication apparatus provided in the present application.
FIG. 12 is a schematic structural diagram of an electronic device provided in an embodiment of the present application.

### DESCRIPTION OF EMBODIMENTS

In embodiments of the present application, unless otherwise specified, the character "/" indicates that the associated objects are in an "or" relationship. For example, A/B may represent A or B. "And/or" describes the association relationship of the associated objects, indicating that there may be three kinds of relationship. For example, A and/or B can represent the following three situations: A exists alone; A and B exist at the same time; and B exists alone.

It should be noted that the words "first", "second", etc. involved in embodiments of the present application are only for the purpose of describing in a distinguishing manner, and cannot be understood as indicating or implying relative importance or implicitly indicating the number of technical features indicated, nor can they be understood as indicating or implying an order.

In embodiments of the present application, "at least one" refers to one or more, and "multiple" refers to two or more. In addition, "at least one of the following" or similar expressions refers to any combination of these items, which may include a single item or any combination of plural items. For example, at least one of A, B or C may represent: A; B; C; A and B; A and C; B and C; or A, B and C. Each of A, B, and C may be an element itself, or a set containing one or more elements.

In embodiments of the present application, "exemplary", "in some embodiments", "in another embodiment", etc. are used to indicate examples, illustrations or explanations. Any embodiment or design described as an "example" in the present application should not be interpreted as being more preferred or more advantageous than other embodiments or designs. Specifically, the use of the word "example" is intended to present concepts in a specific way.

In embodiments of the present application, "of (of)", "corresponding (corresponding, relevant)" and "corresponding (corresponding)" may sometimes be used interchangeably. It should be noted that when the distinction therebetween is not emphasized, the meanings to be expressed are consistent. In embodiments of the present application, communication and transmission may sometimes be used interchangeably. It should be noted that when the distinction therebetween is not emphasized, the meanings to be expressed are consistent. For example, transmission may include sending and/or receiving, which may be a noun or a verb.

Equal involved in embodiments of the present application may be used in conjunction with greater than, which is applicable to the technical solution adopted for a greater than scenario, and may also be used in conjunction with less than, which is applicable to the technical solution adopted for a less than scenario. It should be noted that when equal is used in conjunction with greater than, it cannot be used in conjunction with less than; when equal is used in conjunction with less than, it cannot be used in conjunction with greater than.

The following explains some of the terms involved in the embodiments of the present application for the convenience of understanding by those skilled in the art.
1. Terminal device. In embodiments of the present application, the terminal device is a device with wireless transceiver functions, which may be referred to as a terminal (terminal), user equipment (user equipment, UE), a mobile station (mobile station, MS), a mobile terminal (mobile terminal, MT), access terminal equipment, vehicle-mounted terminal equipment, industrial control terminal equipment, a UE unit, a UE station, a mobile station, a remote station, remote terminal equipment, mobile equipment, UE terminal equipment, wireless communication equipment, a UE agent or a UE apparatus, etc. The terminal device can be fixed or mobile. It should be noted that the terminal device may support at least one wireless communication technology, such as long term evolution (long term evolution, LTE), new radio (new radio, NR). For example, the terminal device may be a mobile phone (mobile phone), a tablet computer (pad), a desktop computer, a laptop computer, an all-in-one computer, a vehicle-mounted terminal, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or other processing device connected to a wireless modem, a wearable device, a terminal device in a future mobile communication network, or a terminal device in a future evolving public land mobile network (public land mobile network, PLMN), etc. In some embodiments of the present application, the terminal device may also be an apparatus with transceiver functions, such as a chip system. The chip system may include a chip and other discrete devices.
2. Network device. In embodiments of the present application, the network device is a device that provides wireless communication functions for terminal devices, and may also be referred to as access network equipment, radio access network (radio access network, RAN) equipment, etc. The network device may support at least one wireless communication technology, such as LTE, NR. For example, the network device includes, but is not limited to: a next generation base station (generation nodeB, gNB) in the fifth generation mobile communication system (5th-generation, 5G), evolved node B (evolved node B, eNB), a radio network controller (radio network controller, RNC), node B (node B, NB), a base station controller (base station controller, BSC), a base transceiver station (base transceiver station, BTS), a home base station (for example, home evolved node B, or home node B, HNB), a baseband unit (baseband unit, BBU), a transmitting and receiving point (transmitting and receiving point, TRP), a transmitting point (transmitting point, TP), a mobile switching center, etc. The network device may also be a wireless controller, a centralized unit (centralized unit, CU), and/or a distributed unit (distributed unit, DU) in a cloud radio access network (cloud radio access network, CRAN) scenario, or the network device may be a relay station, an access point, a vehicle-mounted device, a terminal device, a wearable device, and a network device in future mobile communications or a network device in a future evolving PLMN. In some embodiments, the network device may also be an apparatus that provides wireless communication functions for terminal devices, such as a chip system. For example, the chip system may include a chip and may also include other discrete devices.
3. Bandwidth Part (Bandwidth Part, BWP). In embodiments of the present application, the bandwidth part is a portion of a total bandwidth of a cell, and may also be referred to as a bandwidth part. BWP may include an uplink sub-band, a downlink sub-band, and a guard band, and the guard band is used to separate the uplink sub-band from the downlink sub-band to avoid interference between the uplink sub-band and the downlink sub-band. The uplink sub-band refers to a frequency band used for uplink transmission, and there is an uplink bandwidth, an uplink start frequency domain position, and an uplink end frequency domain position for the uplink sub-band. The downlink sub-band refers to a frequency band used for downlink transmission, and there is a downlink bandwidth, a downlink start frequency domain position, and a downlink end frequency domain position for the downlink sub-band.

In actual application scenarios, changes in the uplink sub-band and/or the downlink sub-band may occur, which may cause a position, a bandwidth, and/or a direction of the uplink sub-band and/or the downlink sub-band in the BWP to change. For uplink resources, such as RO resources and PUCCH resources, only uplink resources that fall within the uplink sub-band are valid, and uplink resources outside the uplink sub-band cannot be used by terminal devices, that is, cannot be used for uplink transmission. At present, a network side usually uses semi-static signaling, such as RRC signaling to configure the uplink resources. However, there is no clear provisions in the protocol on how to process the above-already-configured uplink resources in a case of dynamic changes in the uplink sub-band and/or the downlink sub-band. If the uplink resources are not effectively processed, the uplink communication performance will be affected. Therefore, how to process the uplink resources in the case of dynamic changes in the uplink sub-band and/or the downlink sub-band is an urgent problem to be solved.

Based on the above problems, an embodiment of the present application proposes a communication method.

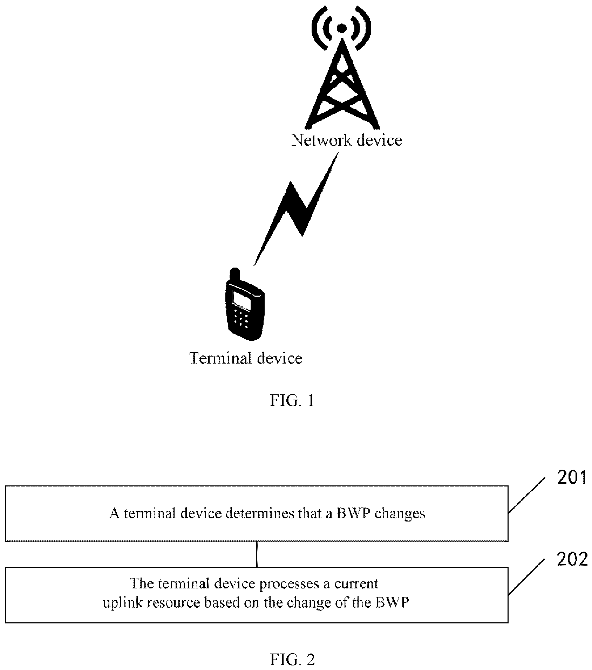

The communication method provided in the embodiment of the present application is now described in conjunction with FIGS. 1 to 9.

As shown in FIG. 1, which is a network architecture diagram of a communication system provided in an embodiment of the present application, the communication system includes a terminal device and a network device.

FIG. 1 is only an example of a communication system in an embodiment of the present application, and embodiments of the present application does not pose limitation on this. For example, the communication system in the embodiment of the present application may include multiple network devices, or include multiple terminal devices, etc.

As shown in FIG. 2, which is a flow diagram of an embodiment of a communication method provided in the present application, the method specifically includes the following steps.

Step 201, a terminal device determines that a BWP changes.

Specifically, the change of the BWP may include changes in an uplink sub-band, a downlink sub-band and/or a guard band. Taking the uplink sub-band as an example, the change of the uplink sub-band includes changes in a position, a bandwidth, and/or a direction of the uplink sub-band. The position of the uplink sub-band is used to represent a frequency domain position of the uplink sub-band in the BWP. Exemplarily, taking a PUCCH resource as an example, the frequency domain position can be represented by an index number of a resource block (Resource Block, RB), where the RB is a resource unit occupied by the PUCCH, and one PUCCH resource can be distributed on multiple RBs; the bandwidth of the uplink sub-band is used to represent a bandwidth occupied by the uplink sub-band in the BWP; the direction of the uplink sub-band is used to represent a communication direction of the uplink sub-band in the BWP, for example, the direction of the uplink sub-band is uplink, and the direction of the downlink sub-band is downlink. If the uplink sub-band is changed to a downlink sub-band, it can be considered that the direction is changed from uplink to downlink. For the change of the downlink sub-band, reference may be made to the above-mentioned change of the uplink sub-band, and details will not be repeated here. The change of the guard band includes the change of a position and/or a bandwidth of the guard band.

It can be understood that a BWP contains an uplink sub-band, a downlink sub-band, and/or a guard band. For example, taking a BWP including 2 sub-bands as an example, a frequency band of the BWP may be DU or UD; taking a BWP including 3 sub-bands as an example, the frequency band of the BWP may be DDD, UUU, DUD, DUU, UUD, DDU, UDU or UDD, where U represents an uplink sub-band and D represents a downlink sub-band.

Exemplarily, the change of the BWP may be the change of the direction of the sub-band in BWP, for example, from DU to UD, or from DUD to UDU, etc.

The change of the BWP may also be the change of the position and/or the bandwidth of the sub-band. For example, the change of the BWP may be caused by the change of the uplink sub-band, for example, the position, the bandwidth, and/or the direction of the uplink sub-band changes, thus causing the position, the bandwidth, and/or the direction of the uplink sub-band to change; or the change of the BWP may also be caused by the change of the downlink sub-band, for example, the position, the bandwidth, and/or the direction of the downlink sub-band changes, thereby causing the downlink sub-band to encroach on the uplink sub-band; or the change of the BWP may also be caused by the change of the guard band, for example, the position and/or the bandwidth of the guard band changes, thereby causing the guard band to encroach on the uplink sub-band. Embodiments of the present application do not specifically limit this.

The specific mode of determining that the BWP changes may include the following three modes.

Mode 1: determine, through first configuration information, that the BWP changes.

A network device may send the first configuration information to the terminal device, and accordingly, the terminal device receives the first configuration information. The first configuration information may be carried by downlink control information (Downlink Control Information, DCI), medium access control control element (Medium Access Control Control Element, MAC CE) and/or radio resource control RRC signaling. The first configuration information may be used to configure an uplink sub-band, a downlink sub-band and/or a guard band within the BWP.

For example, the first configuration information may be carried by DCI to configure an index number of a resource block (Resource Block, RB) at a start position of each uplink sub-band and/or each downlink sub-band.

For another example, the first configuration information may be carried by DCI to configure an index number of a RB at a start position of each guard band and the bandwidth of the guard band.

For another example, the first configuration information may be carried by DCI and RRC signaling, and DCI is used to configure the index number of the RB at the start position of each guard band. The bandwidth of the guard band may be configured by high-level signaling (for example, RRC signaling).

For another example, the first configuration information may be carried by RRC signaling, MAC CE and/or DCI. MAC CE or DCI is used to update the bandwidth and/or the start position of each uplink sub-band and/or each downlink sub-band. The initial bandwidth and/or the start position of each uplink and/or downlink sub-band may be configured by RRC signaling.

For another example, the first configuration information may be carried by RRC signaling, MAC CE and/or DCI. MAC CE or DCI is used to update the bandwidth and/or the start position of each guard band. The initial bandwidth and/or the start position of each guard band may be configured by RRC signaling.

Mode 2: determine, through a BWP switching indication, that the BWP changes.

The network device can send a BWP switching indication to the terminal device to indicate that the BWP has been switched. Correspondingly, the terminal device receives the BWP switching indication, thereby determining that the BWP changes.

Mode 3: determine, by detecting a BWP inactivity timer, that the BWP changes.

The terminal device may monitor the BWP inactivity timer (BWP Inactive Timer). If the BWP inactivity timer expires, it can be considered that the BWP has been switched.

Step 202, the terminal device processes a current uplink resource based on the change of the BWP.

Specifically, after determining that the BWP changes, the terminal device may process the current uplink resource based on the change of the BWP.

The current uplink resource may be an uplink resource used by the terminal device in the present uplink transmission, that is, the terminal device may use the current uplink resource for uplink transmission in the present uplink transmission, and the uplink resource may include PUCCH resources or RO resources.

Because the BWP has changed, the current uplink resource originally located in an uplink sub-band of the BWP before the change may fall outside the uplink sub-band of the BWP after the change. At this time, the terminal device may determine whether the current uplink resource is in the uplink sub-band of the BWP after the change, and may process the current uplink resource according to the determination result. In a specific implementation, the specific way of processing the current uplink resource may be that:
if the current uplink resource is not entirely located in the uplink sub-band of the changed BWP, the terminal device discards the current uplink resource; or,
if the current uplink resource is not entirely located in the uplink sub-band of the changed BWP, the terminal device uses a part of the current uplink resource which is located in the uplink sub-band of the changed BWP; or,
if the current uplink resource is not entirely located in the uplink sub-band of the changed BWP, the terminal device discards the current uplink resource and may use, in a next uplink transmission, an uplink resource with a same frequency domain resource position as the current uplink resource; or,
if the current uplink resource is not entirely located in the uplink sub-band of the changed BWP, the terminal device moves the current uplink resource to the uplink sub-band of the changed BWP.

In the embodiments of the present application, the terminal device processes the uplink resource after detecting that the BWP changes, so that the current uplink resource can adapt to the uplink sub-band of the changed BWP, thus facilitating improvement of the uplink communication performance.

The following is a specific introduction to the communication method of the embodiments of the present application in combination with different changes in the BWP.

Embodiment 1: the current uplink resource is a current PUCCH resource, the current PUCCH resource occupies one RB, and the frequency band of the BWP is DUD.

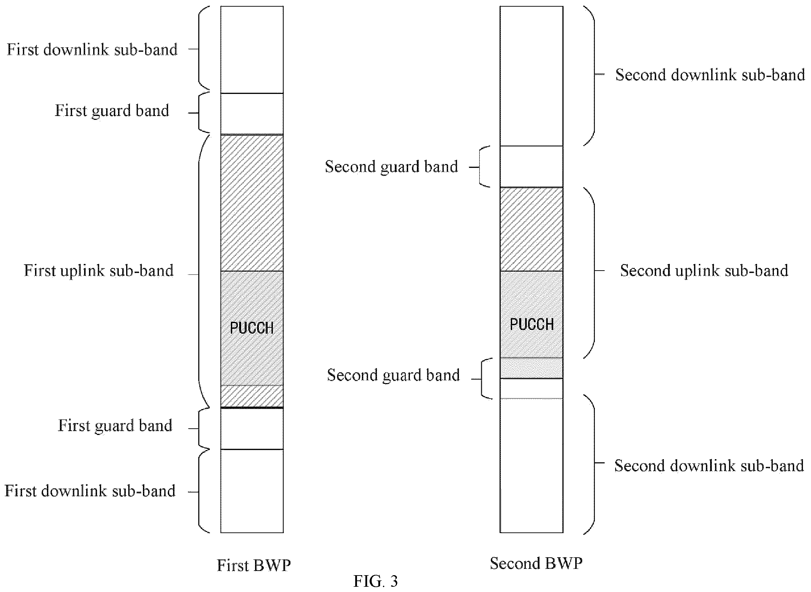

FIG. 3 is a schematic diagram of an embodiment of PUCCH resource processing provided in the present application. As shown in FIG. 3, the BWP before the change includes an uplink sub-band before the change, a downlink sub-band before the change, and a guard band before the change. The changed BWP includes an uplink sub-band after the change, a downlink sub-band after the change, and a guard band after the change. For the convenience of illustration, the BWP before the change is referred to as a first BWP, the uplink sub-band before the change is referred to as a first uplink sub-band, the downlink sub-band before the change is referred to as a first downlink sub-band, and the guard band before the change is referred to as a first guard band; the BWP after the change is referred to as a second BWP, the uplink sub-band after the change is referred to as a second uplink sub-band, the downlink sub-band after the change is referred to as a second downlink sub-band, and the guard band after the change is referred to as a second guard band.

If the bandwidth of the first downlink sub-band is increased, the problem that the current PUCCH resource is not entirely located in the second uplink sub-band may occur. As shown in FIG. 3, in the second BWP, due to the increase in the bandwidth of the downlink sub-band, the bandwidth of the uplink sub-band is reduced, so that the current PUCCH resource is not entirely located in the second uplink sub-band, thereby making the current PUCCH resource unavailable.

At this time, the terminal device may determine whether the current PUCCH resource is entirely located in the second uplink sub-band.

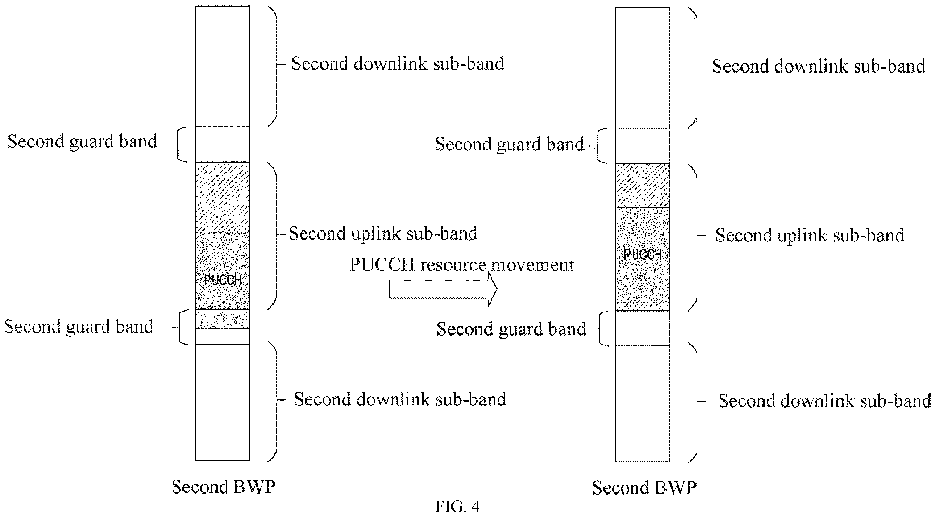

If the current PUCCH resource is not entirely located in the second uplink sub-band, the terminal device may discard the current PUCCH resource, that is, the terminal device abandons the present uplink transmission and does not use the current PUCCH resource for the present uplink transmission; or
the terminal device may move the current PUCCH resource to the second uplink sub-band, thereby allowing the terminal device to use the current PUCCH resource, thereby improving the use efficiency of uplink resources. FIG. 4 is a schematic diagram of PUCCH resource position change provided in an embodiment of the present application. As shown in FIG. 4, the current PUCCH resource is not entirely located in the second uplink sub-band, which leads to the problem that the current PUCCH resource is unavailable. It can be understood that in the scenario shown in FIG. 4, the current PUCCH resource may be partially located outside the second uplink sub-band, or may be entirely located outside the uplink sub-band, and embodiments of the present application do not specifically limit this. At this time, the terminal device may move the current PUCCH resource to the second uplink sub-band.

In some optional embodiments, after the terminal device moves the current PUCCH resource, if it is detected that the current PUCCH resource after the moving collides with other PUCCH resources, or the current PUCCH resource after the moving is still not entirely located in the second uplink sub-band, the terminal device discards the current PUCCH resource. If it is detected that the current PUCCH resource after the moving does not collide with other PUCCH resources, and the current PUCCH resource after the moving is entirely located in the second uplink sub-band, the terminal device may use the current PUCCH resource after the moving for the present uplink transmission.

In some optional embodiments, after the terminal device discards the current PUCCH resource, if the PUCCH resource is non-periodic, the terminal device may use, in a next uplink transmission, a PUCCH resource with a same frequency domain resource position as the current PUCCH resource, that is, postpone the use of the above-mentioned current PUCCH resource.

Embodiment 2: the current uplink resource is a current PUCCH resource, the current PUCCH resource occupies multiple RBs, and the frequency band of the BWP is DUD.

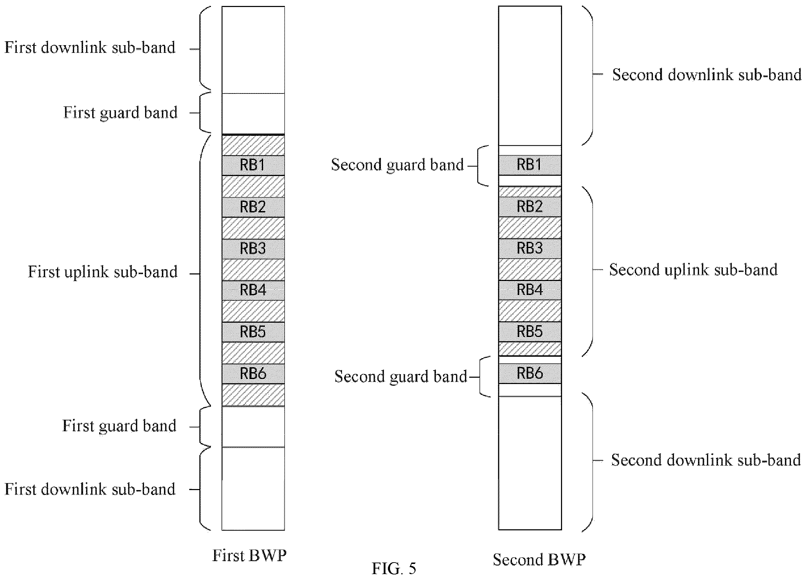

FIG. 5 is a schematic diagram of another embodiment of PUCCH resource processing provided in the present application. As shown in FIG. 5, the current PUCCH resource is distributed over multiple RBs, for example, RB1-RB6. If the bandwidth of the first downlink sub-band is increased, the position of the guard band will change, and the position and the bandwidth of the uplink sub-band will change, so that a problem that the current PUCCH resource is not entirely located in the second uplink sub-band may occur. As shown in FIG. 5, in the second BWP, due to the increase in the bandwidth of the downlink sub-band, the bandwidth of the uplink sub-band is reduced, so that a part of the current PUCCH resource is located outside the second uplink sub-band, making a part of the PUCCH resource in the second uplink sub-band unavailable. For example, RB1 and RB6 are located outside the second uplink sub-band, making RB1 and RB6 unavailable, while RB2, RB3, RB4 and RB5 are located within the second uplink sub-band.

At this time, the terminal device may determine whether the current PUCCH resource (for example, RB1-RB6) is entirely located in the second uplink sub-band.

If the current PUCCH resource is not entirely located in the second uplink sub-band, for example, RB1 and RB6 are located outside the second uplink sub-band, and RB2, RB3, RB4 and RB5 are located in the second uplink sub-band;
the terminal device may discard all of the current PUCCH resource. For example, the terminal device may discard RB1-RB6, that is, the terminal device abandons the present uplink transmission and does not use any resources in the current PUCCH for the present uplink transmission; or,
the terminal device may use a part of the current PUCCH resource for the present uplink transmission, for example, this part of the current PUCCH resource may be RB2, RB3, RB4 and RB5.

It should be noted that the above embodiments are illustrated by taking the frequency band of the BWP as DUD as an example, but this does not constitute a limitation on the embodiments of the present application. In some embodiments, processing may also be performed based on frequency band modes such as DU, UD, DDD, UUU, DUU, UUD, DDU, UDU or UDD, or processing may also be performed for a scene of frequency band mode change, for example, switching from UDU to DUD, etc. For the specific processing modes, reference may be made to the processing mode for DUD, and details will not be repeated here.

In some optional embodiments, although the terminal device may use uplink resources on different uplink sub-bands for uplink transmission, there will be a problem of Peak-to-Average Power Ratio (Peak-to-Average Power Ratio, PAPR). Therefore, for scenarios where PUCCH resources are distributed on multiple RBs, a PUCCH resource of one sub-band in the BWP may be used for uplink transmission.

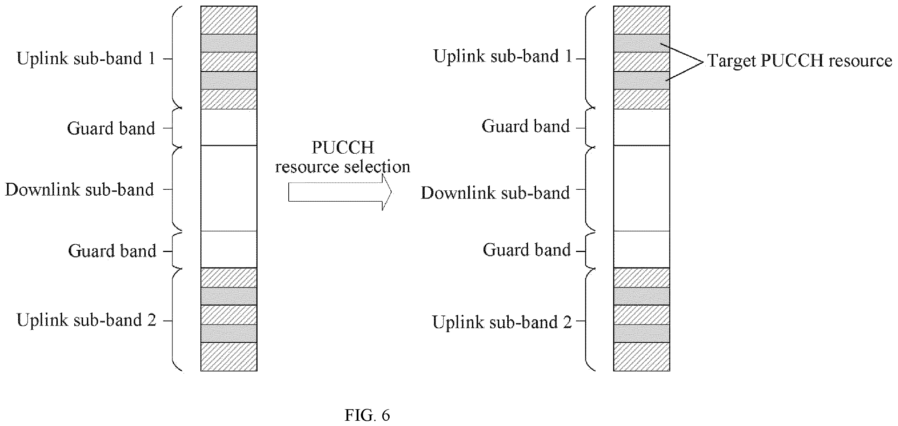

FIG. 6 is a schematic diagram of PUCCH resource selection provided in an embodiment of the present application. As shown in FIG. 6, the BWP contains uplink sub-band 1 and uplink sub-band 2, where the PUCCH resource of uplink sub-band 1 is different from the PUCCH resource of uplink sub-band 2. Therefore, when performing uplink transmission, the terminal device may select the PUCCH resource of uplink sub-band 1 as a target PUCCH resource for uplink transmission, or select the PUCCH resource of uplink sub-band 2 as the target resource for uplink transmission.

Embodiment 3: the current uplink resource is a current PUCCH resource, the frequency band of the BWP is switched from U to UDU, and the current PUCCH resource undergoes frequency hopping.

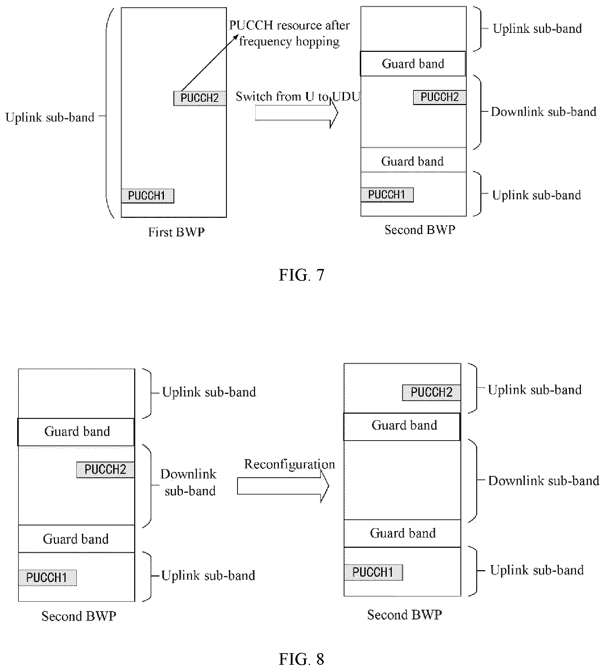

FIG. 7 is a schematic diagram of PUCCH resource frequency hopping provided in an embodiment of the present application. As shown in FIG. 7, the BWP before the change is in a case of frequency band U; and the BWP after the change is in a case of frequency band UDU. The BWP before the change may be considered as a first BWP, and the BWP after the change may be considered as a second BWP.

It can be understood that when the frequency band of the BWP is U and no switching occurs, the current PUCCH resource after frequency hopping (for example, PUCCH2) is still located in the uplink sub-band, so this will not affect the uplink transmission of the terminal device. However, if the frequency band of the BWP is switched from U to UDU, the current PUCCH resource after frequency hopping may be located in the downlink sub-band of the second BWP, which will make the terminal device unable to use the current PUCCH resource located in the downlink sub-band of the second BWP, thereby affecting the uplink transmission of the terminal device.

Therefore, the terminal device may determine whether the current PUCCH resource after frequency hopping is entirely located in the uplink sub-band of the second BWP, where the current PUCCH resource after frequency hopping is used for the present uplink transmission.

If the current PUCCH resource after frequency hopping is not entirely located in the uplink sub-band of the second BWP, the terminal device may discard the current PUCCH resource after frequency hopping.

In some optional embodiments, in order to avoid the current PUCCH resource after frequency hopping from being located outside the uplink sub-band of the second BWP after BWP switching, the network device may send second configuration information to the terminal device, where the second configuration information is used to reconfigure the PUCCH resource after frequency hopping, and the reconfigured current PUCCH resource after frequency hopping is located in the uplink sub-band of the second BWP, and the reconfigured current PUCCH resource after frequency hopping is used for the present uplink transmission. Accordingly, the terminal device receives the second configuration information and may determine whether the current PUCCH resource after frequency hopping is entirely located in the uplink sub-band of the second BWP.

If the current PUCCH resource after frequency hopping is not entirely located in the uplink sub-band of the second BWP, the terminal device may determine the current PUCCH resource after frequency hopping based on the second configuration information, thereby ensuring that the current PUCCH resource after frequency hopping is located in the uplink sub-band of the second BWP, thus facilitating improvement of the uplink communication performance.

FIG. 8 is a schematic diagram of reconfiguration of a PUCCH resource after frequency hopping provided in an embodiment of the present application. Referring to FIG. 8, after the terminal device detects that the BWP is switched from U to UDU, if it is determined that the PUCCH resource after frequency hopping (for example, PUCCH2) is located in the downlink sub-band, that is, PUCCH2 is not entirely located in the uplink sub-band, then the terminal device may reconfigure PUCCH2 based on the second configuration information, thereby making PUCCH2 be located in the uplink sub-band.

It should be noted that the above embodiment is illustrated by taking a scenario where the frequency band of the BWP is switched from U to UDU as an example, but this does not constitute a limitation on the embodiments of the present application. In some embodiments, the implementation may also be based on switching between other frequency bands, for example, switching from UDU to DUD, etc. For the specific processing modes, reference may be made to the processing mode of the above embodiment, and details will not be repeated here.

Embodiment 4: the current uplink resource is a current RO resource, and the frequency band of the BWP is UD.

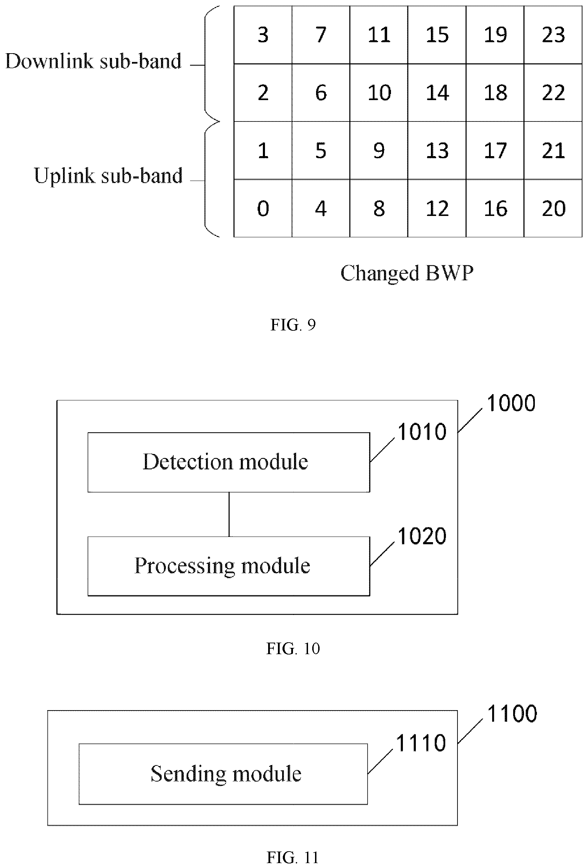

FIG. 9 is a schematic diagram of RO resource processing provided in an embodiment of the present application. As shown in FIG. 9, the BWP includes an uplink sub-band and a downlink sub-band. When detecting that the BWP changes, the terminal device may determine whether the current RO resource is entirely located in the uplink sub-band of the changed BWP. The current RO resource may be used for the present uplink transmission.

If the current RO resource is not entirely located in the uplink sub-band of the changed BWP, the terminal device may discard the current RO resource; or,
if the current RO resource is not entirely located in the uplink sub-band of the changed BWP, the terminal device may use a part of the current RO resource which is located in the uplink sub-band of the changed BWP.

There is a mapping relationship between the RO resource in a BWP and a synchronization signal block (Synchronization Signal Block, SSB). Referring to FIG. 9, a BWP contains 24 RO resources such as SSB0-SSB23. After the BWP is switched, the downlink sub-band of the changed BWP includes 12 RO resources, namely SSB2, SSB3, SSB6, SSB7, SSB10, SSB11, SSB14, SSB15, SSB18, SSB19, SSB22 and SSB23, and the uplink sub-band of the changed BWP includes 12 RO resources, namely SSB0, SSB1, SSB4, SSB5, SSB8, SSB9, SSB12, SSB13, SSB16, SSB17, SSB20 and SSB21. At this time, the terminal device may discard the above 24 RO resources of SSB0-SSB23, that is, abandon the present uplink transmission, or the terminal device may use the above 12 RO resources located in the uplink sub-band, for example, SSB0, SSB1, SSB4, SSB5, SSB8, SSB9, SSB12, SSB13, SSB16, SSB17, SSB20 and SSB21, for the present uplink transmission.

It should be noted that the above embodiment is illustrated by taking a scenario where the frequency band of BWP is UD as an example, but this does not constitute a limitation on the embodiments of the present application. In some embodiments, the implementation may also be based on other frequency bands. For the specific processing modes, reference may be made to the processing mode of the above embodiment, and details will not be repeated here.

The above embodiments may be used alone or in combination with each other to achieve different technical effects.

In the above embodiments provided in the present application, the communication method provided in the embodiments of the present application is introduced from the perspective of the network device and the terminal device as the execution subjects. In order to implement the functions of the communication method provided in the above embodiments of the present application, the terminal device and the network device may include a hardware structure and/or a software module, and implement the above functions in the form of a hardware structure, a software module, or a hardware structure plus a software module. Whether one of the above functions is executed in the form of a hardware structure, a software module, or a hardware structure plus a software module depends on the specific application and design constraints of the technical solution.

FIG. 10 is a schematic structural diagram of a communication apparatus 1000 provided in an embodiment of the present application, which may include: a detection module 1010 and a processing module 1020.

The detection module 1010 is configured to: detect, by a terminal device, a change in a bandwidth part BWP.

The processing module 1020 is configured to: process, by the terminal device after determining that the bandwidth part BWP changes, a current uplink resource based on the change of the BWP, where the current uplink resource is used for a present uplink transmission.

In a possible implementation, the uplink resource includes a physical uplink control channel PUCCH resource or a RACH Occasion RO resource.

In a possible implementation, the detection module 1010 is specifically configured to: receive, by the terminal device, first configuration information, and determine, based on the first configuration information, that the BWP changes, where the first configuration information is used to configure an uplink sub-band, a downlink sub-band and/or a guard band within the BWP, or,
receive, by the terminal device, a BWP switching indication, and determine, based on the BWP switching indication, that the BWP changes, or,
detect, by the terminal device, whether expiration of a BWP inactivity timer has been reached, and if expiration of the BWP inactivity timer has been reached, determine that the BWP changes.

In a possible implementation, the first configuration information is carried by downlink control information DCI, medium access control control element MAC CE and/or radio resource control RRC signaling.

In a possible implementation, the processing module 1020 is specifically configured to: determine whether the current uplink resource is entirely located in an uplink sub-band of the changed BWP;
if the current uplink resource is not entirely located in the uplink sub-band of the changed BWP, discard, by the terminal device, the current uplink resource.

In a possible implementation, the processing module 1020 is specifically configured to: determine whether the current uplink resource is entirely located in an uplink sub-band of the changed BWP;
if the current uplink resource is not entirely located in the uplink sub-band of the changed BWP, use, by the terminal device, a part of the current uplink resource which is located in the uplink sub-band of the changed BWP.

In a possible implementation, the processing module 1020 is further configured to: use, by the terminal device in a next uplink transmission, an uplink resource with a same frequency domain resource position as the current uplink resource.

In a possible implementation, the uplink resource is a PUCCH resource, and the processing module 1020 is further configured to: determine whether the current PUCCH resource is entirely located in an uplink sub-band of the changed BWP;
if the current PUCCH resource is not entirely located in the uplink sub-band of the changed BWP, move, by the terminal device, the current PUCCH resource to the uplink sub-band of the changed BWP.

In a possible implementation, the processing module 1020 is further configured to: if it is detected that the current PUCCH resource after the moving collides with other PUCCH resources or the current PUCCH resource after the moving is still not entirely located in the uplink sub-band of the changed BWP, discard, by the terminal device, the current PUCCH resource after the moving.

In a possible implementation, the uplink resource is a PUCCH resource, and the processing module 1020 is further configured to: determine whether the current PUCCH resource after frequency hopping is entirely located in an uplink sub-band of the changed BWP, where the current PUCCH resource after frequency hopping is used for the present uplink transmission;
if the current PUCCH resource after frequency hopping is not entirely located in the uplink sub-band of the changed BWP, discard, by the terminal device, the current PUCCH resource after frequency hopping.

In a possible implementation, the uplink resource is a PUCCH resource, and the processing module 1020 is further configured to: determine whether the current PUCCH resource after frequency hopping is entirely located in an uplink sub-band of the changed BWP, where the current PUCCH resource after frequency hopping is used for the present uplink transmission;
if the current PUCCH resource after frequency hopping is not entirely located in the uplink sub-band of the changed BWP, determine, by the terminal device, the current PUCCH resource after frequency hopping based on second configuration information, where the second configuration information is used to reconfigure the PUCCH resource after frequency hopping, and the reconfigured current PUCCH resource after frequency hopping is located in the uplink sub-band of the changed BWP, and the reconfigured current PUCCH resource after frequency hopping is used for the present uplink transmission.

In a possible implementation, the communication apparatus 1000 further includes:
a receiving module 1030, configured to receive the second configuration information, where the second configuration information is carried by RRC signaling.

In a possible implementation, the communication apparatus 1000 may be a chip or a terminal device.

FIG. 11 is a schematic structural diagram of a communication apparatus 1100 provided in an embodiment of the present application, which may include: a sending module 1110.

The sending module 1110 is configured to: send, by a network device, first configuration information or a bandwidth part BWP switching indication to indicate that a BWP changes, where the first configuration information is used to configure an uplink sub-band, a downlink sub-band and/or a guard band within the bandwidth part BWP.

In a possible implementation, the first configuration information is carried by downlink control information DCI, medium access control control element MAC CE and/or radio resource control RRC signaling.

In a possible implementation, the sending module 1110 is further configured to: if the BWP changes, send, by the network device, second configuration information, where the second configuration information is used to reconfigure a current PUCCH resource after frequency hopping, and the reconfigured current PUCCH resource after frequency hopping is located in an uplink sub-band of the changed BWP.

In a possible implementation, the second configuration information is carried by RRC signaling.

In a possible implementation, the communication apparatus 1100 may be a chip or a network device.

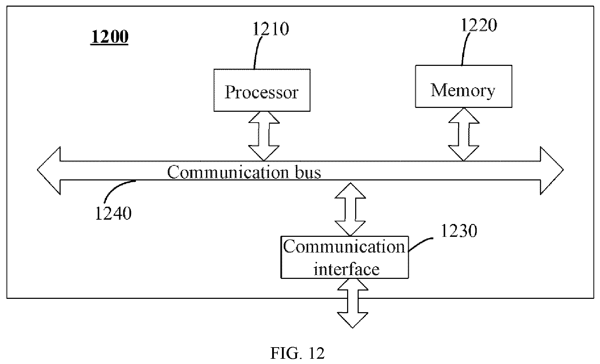

FIG. 12 is a schematic structural diagram of a communication apparatus 1200 provided in an embodiment of the present application. The communication apparatus 1200 may include: at least one processor; and at least one memory in communication connection with the processor. The communication apparatus 1200 may be a network device or a terminal device. The memory stores program instructions executable by the processor. If the communication apparatus 1200 is a network device, the processor calls the program instructions to execute the actions performed by the network device in the communication method provided in embodiments of the present application. If the communication apparatus 1200 is a terminal device, the processor calls the program instructions to execute the actions performed by the terminal device in the communication method provided in embodiments of the present application.

As shown in FIG. 12, the communication apparatus 1200 may be embodied in the form of a general-purpose computing device. The components of the communication apparatus 1200 may include, but are not limited to: one or more processors 1210, a memory 1220, a communication bus 1240 connecting different system components (including the memory 1220 and the processor 1210), and a communication interface 1230.

The communication bus 1240 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (Industry Standard Architecture, ISA) bus, a Micro Channel Architecture (Micro Channel Architecture, MAC) bus, an enhanced ISA bus, a Video Electronics Standards Association (Video Electronics Standards Association, VESA) local bus, and a Peripheral Component Interconnection (Peripheral Component Interconnection, PCI) bus.

The communication apparatus 1200 typically includes a variety of computer system readable media. These media can be any available media that can be accessed by the communication apparatus 1200, including volatile and non-volatile media, removable and non-removable media.

The memory 1220 may include computer system readable media in the form of volatile memory, such as a random access memory (Random Access Memory, RAM) and/or a cache memory. The communication apparatus 1200 may further include other removable/non-removable, volatile/non-volatile computer system storage media. Although not shown in FIG. 12, a disk drive for reading and writing removable non-volatile disks (such as "floppy disks") and an optical disk drive for reading and writing removable non-volatile optical disks (such as: Compact Disc Read Only Memory (Compact Disc Read Only Memory, CD-ROM), Digital Video Disc Read Only Memory (Digital Video Disc Read Only Memory, DVD-ROM) or other optical media) may be provided. In these cases, each drive may be connected to the communication bus 1240 via one or more data media interfaces. The memory 1220 may include at least one program product having a set (e.g., at least one) of program modules configured to perform the functions of various embodiments of the present application.

A program/utility having a set (e.g., at least one) of program modules may be stored in the memory 1220, such program modules including, but not limited to, an operating system, one or more application programs, other program modules, and program data, each of which or some combination may include an implementation of a network environment. The program modules generally perform the functions and/or methods of the embodiments described in the present application.

The communication apparatus 1200 may also communicate with one or more external devices (e.g., a keyboard, a pointing device, a display, etc.), may also communicate with one or more devices that enable a user to interact with the communication apparatus 1200, and/or communicate with any device (e.g., a network interface card, a modem, etc.) that enables the communication apparatus 1200 to communicate with one or more other computing devices. Such communication may be performed through the communication interface 1230. Furthermore, the communication apparatus 1200 may also communicate with one or more networks (such as a local area network (Local Area Network, LAN), a wide area network (Wide Area Network, WAN) and/or a public network, such as the Internet) through a network adapter (not shown in FIG. 12), and the network adapter may communicate with other modules of the electronic device through the communication bus 1240. It should be understood that, although not shown in FIG. 5, other hardware and/or software modules may be used in conjunction with the communication apparatus 1200, including but not limited to: microcode, a device driver, a redundant processing unit, an external disk drive array, redundant arrays of independent drives (Redundant Arrays of Independent Drives, RAID) system, a tape drive, and a data backup storage system.

Through the description of the above implementations, the skilled in the art can clearly understand that for the convenience and simplicity of description, the division of the above functional modules is used only as an example. In actual application, the above functions may be distributed to different functional modules to complete as needed, that is, the internal structure of the device may be divided into different functional modules to complete all or part of the functions described above. For the specific working process of the system, device and unit described above, reference may be made to the corresponding process in the aforementioned method embodiments, and details will not be repeated here.

Each functional unit in each embodiment of the present application may be integrated into a processing unit, or each unit can exist physically separately, or two or more units may be integrated into one unit. The above-mentioned integrated unit may be implemented in the form of hardware or in the form of a software functional unit.

If the integrated unit is implemented in the form of a software functional unit and sold or used as an independent product, it can be stored in a computer-readable storage medium. Based on this understanding, the technical solution of the embodiments of the present application essentially or the part that contributes to the prior art or all or part of the technical solution may be embodied in the form of a software product, and the computer software product is stored in a storage medium, including several instructions for a computer device (which may be a personal computer, a server, or a network device, etc.) or a processor to perform all or part of the steps of the method described in each embodiment of the present application. The aforementioned storage medium includes: a flash memory, a mobile hard disk, a read-only memory, a random access memory, a disk or an optical disk, and various media that can store program codes.

The above are only specific implementations of the present application, but the protection scope of the present application is not limited to this. Any changes or replacements within the technical scope disclosed in the present application should be covered within the protection scope of the present application. Therefore, the protection scope of the present application shall be subject to the protection scope of the appended claims.

## Claims

1. A communication method, comprising:
processing, by a terminal device after the terminal device determines that a bandwidth part BWP changes, a current uplink resource based on the change of the BWP, wherein the current uplink resource is used for a present uplink transmission.

2. The method according to claim 1, wherein the uplink resource includes a physical uplink control channel PUCCH resource or a RACH Occasion RO resource.

3. The method according to claim 1, wherein the terminal device determining that the bandwidth part BWP changes comprises:
receiving, by the terminal device, first configuration information, and determining, based on the first configuration information, that the BWP changes, wherein the first configuration information is used to configure an uplink sub-band, a downlink sub-band and/or a guard band within the BWP; or
receiving, by the terminal device, a BWP switching indication, and determining, based on the BWP switching indication, that the BWP changes; or
detecting, by the terminal device, whether expiration of a BWP inactivity timer has been reached, and if expiration of the BWP inactivity timer has been reached, determining that the BWP changes.

4. The method according to claim 3, wherein the first configuration information is carried by downlink control information DCI, medium access control control element MAC CE and/or radio resource control RRC signaling.

5. The method according to any one of claims 1 to 4, wherein processing the current uplink resource based on the change of the BWP comprises:
determining whether the current uplink resource is entirely located in an uplink sub-band of the changed BWP;
if the current uplink resource is not entirely located in the uplink sub-band of the changed BWP, discarding, by the terminal device, the current uplink resource.

6. The method according to any one of claims 1 to 4, wherein processing the current uplink resource based on the change of the BWP comprises:
determining whether the current uplink resource is entirely located in an uplink sub-band of the changed BWP;
if the current uplink resource is not entirely located in the uplink sub-band of the changed BWP, using, by the terminal device, a part of the current uplink resource which is located in the uplink sub-band of the changed BWP.

7. The method according to claim 5, wherein after discarding, by the terminal device, the current uplink resource, the method further comprises:
using, by the terminal device in a next uplink transmission, an uplink resource with a same frequency domain resource position as the current uplink resource.

8. The method according to claim 2, wherein the uplink resource is a PUCCH resource, and processing the current uplink resource based on the change of the BWP comprises:
determining whether the current PUCCH resource is entirely located in an uplink sub-band of the changed BWP;
if the current PUCCH resource is not entirely located in the uplink sub-band of the changed BWP, moving, by the terminal device, the current PUCCH resource to the uplink sub-band of the changed BWP.

9. The method according to claim 8, further comprising:
if it is detected that the current PUCCH resource after the moving collides with other PUCCH resources or the current PUCCH resource after the moving is still not entirely located in the uplink sub-band of the changed BWP, discarding, by the terminal device, the current PUCCH resource after the moving.

10. The method according to claim 2, wherein the uplink resource is a PUCCH resource, and the method further comprises:
determining whether the current PUCCH resource after frequency hopping is entirely located in an uplink sub-band of the changed BWP, wherein the current PUCCH resource after frequency hopping is used for the present uplink transmission;
if the current PUCCH resource after frequency hopping is not entirely located in the uplink sub-band of the changed BWP, discarding, by the terminal device, the current PUCCH resource after frequency hopping.

11. The method according to claim 2, wherein the uplink resource is a PUCCH resource, and the method further comprises:
determining whether the current PUCCH resource after frequency hopping is entirely located in an uplink sub-band of the changed BWP, wherein the current PUCCH resource after frequency hopping is used for the present uplink transmission;
if the current PUCCH resource after frequency hopping is not entirely located in the uplink sub-band of the changed BWP, determining, by the terminal device, the current PUCCH resource after frequency hopping based on second configuration information, wherein the second configuration information is used to reconfigure the PUCCH resource after frequency hopping, and the reconfigured current PUCCH resource after frequency hopping is located in the uplink sub-band of the changed BWP, and the reconfigured current PUCCH resource after frequency hopping is used for the present uplink transmission.

12. The method according to claim 11, further comprising:
receiving the second configuration information, wherein the second configuration information is carried by RRC signaling.

13. A communication method, comprising:
sending, by a network device, first configuration information or a bandwidth part BWP switching indication to indicate that a BWP changes, wherein the first configuration information is used to configure an uplink sub-band, a downlink sub-band and/or a guard band within the bandwidth part BWP.

14. The method according to claim 13, wherein the first configuration information is carried by downlink control information DCI, medium access control control element MAC CE and/or radio resource control RRC signaling.

15. The method according to claim 13, further comprising:
if the BWP changes, sending, by the network device, second configuration information, wherein the second configuration information is used to reconfigure a current PUCCH resource after frequency hopping, and the reconfigured current PUCCH resource after frequency hopping is located in an uplink sub-band of the changed BWP.

16. The method according to claim 13, wherein the second configuration information is carried by RRC signaling.

17. A communication apparatus, comprising: a processor and a memory, wherein the memory is configured to store a computer program; the processor is configured to run the computer program to implement the communication method according to any one of claims 1 to 12.

18. The communication apparatus according to claim 17, wherein the communication apparatus is a chip or a terminal device.

19. A communication apparatus, comprising: a processor and a memory, wherein the memory is configured to store a computer program; the processor is configured to run the computer program to implement the communication method according to any one of claims 13 to 16.

20. The communication apparatus according to claim 19, wherein the communication apparatus is a chip or a network device.

21. A computer-readable storage medium, wherein the computer-readable storage medium stores a computer program, and when the computer program is running on a computer, the method according to any one of claims 1 to 12 or the method according to any one of claims 13 to 16 is implemented.
